# EUROPEAN PATENT APPLICATION

(11) **EP 1 521 022 A1**
(43) Date of publication of application: **06.04.2005**
(21) Application number: 04022146.7
(22) Date of filing: 17.09.2004
(51) Int. Cl.: F16K 17/38

(54) **A safety valve for pressurized tanks, and a tank provided with said valve**

(30) Priority: 30.09.2003 IT TO20030760
(71) Applicant: C.R.F. Società Consortile per Azioni, 10043 Orbassano (TO) (IT)
(72) Inventor: Ricco, Mario, 10043 Orbassano (Torino) (IT); De Matthaeis, Sisto Luigi, 10043 Orbassano (Torino) (IT); Satriano, Annunziata Anna, 10043 Orbassano (Torino) (IT); De Michele, Onofrio, 10043 Orbassano (Torino) (IT); Ricco, Raffaele, 10043 Orbassano (Torino) (IT)
(74) Representative: Notaro, Giancarlo

(57) **Abstract**

A safety valve for pressurized tanks, particularly for tanks for containing methane or LPG for motor vehicles, comprises an open/close element (15) that is kept by elastic means (19) in a closing position, in which it does not enable communication of the internal cavity (4) of the tank with the external atmosphere. When a pre-set maximum value of the pressure inside the tank is exceeded, sufficient for overcoming the load of said elastic means (19), the open/close element (15) is displaced from its closing position and enables discharge of the gas contained in the tank into the external atmosphere. The elastic means (19) are arranged in series with a fuse element (22), which is set between the open/close element (15) and the valve body (5). In this way, whenever the temperature exceeds a pre-set maximum value, the fuse element (22) melts, causing unloading of said elastic means (19), which consequently leaves the open/close element (15) free to open. Preferably, associated to the open/close element (15) are sensor means for detecting the displacement of the open/close element from its closing position, which are designed to signal intervention of the safety valve to the driver.

## Description

The present invention relates to safety valves for pressurized tanks.

Without this implying any limitation of the fact that the present invention is of general application and hence suitable for pressurized tanks of any type, a particular application thereof is a safety valve for gas tanks for motor vehicles, for example tanks for containing methane or LPG.

In tanks of the type specified above, there are envisaged safety standards that impose the provision of a safety valve designed to discharge the internal cavity of the tank to the external atmosphere in the event of an overpressure being generated inside the tank. Also envisaged at times is the use, alongside the overpressure valve, of a fuse member designed to enable discharging of the internal cavity of the tank to the external atmosphere when the temperature exceeds a pre-set maximum value.

The possible causes of generation of an overpressure and/or of an excessive temperature within the tank are numerous. A typical case is that of a fire caused by a collision or some other form of impact in which the motor vehicle carrying the tank is involved. In the case of such a possibility, the presence of just an overpressure valve does not guarantee maximum safety in so far as the valve in any case leaves a certain level of pressure within the tank even after it goes into action. On the other hand, provision of the fuse member alone does not ensure a sufficient degree of safety, in so far as, for instance, the fuse element may not go into action in the case where there is an outbreak of fire in a point that is remote from the area in which the fuse element is provided. This can occur, in particular, in tanks having an elongated shape, in which the fuse element is set at one end of the tank and the fire breaks out at the opposite end, so that the pressure inside the tank exceeds the safety level before the fuse element is able to go into action.

As has already been said, in order to achieve maximum safety, it is possible to provide in parallel an overpressure valve and a fuse member that are able to discharge the tank to the external atmosphere both in the event of a pre-set maximum pressure being overstepped and in the event of a pre-set maximum temperature being overstepped. Said solution, however, envisages larger overall dimensions and higher costs.

With a view to overcoming the above drawbacks, the subject of the present invention is a safety valve for pressurized tanks, comprising:
- a valve body defining an internal cavity with a first opening for discharge to the external atmosphere and a second opening for communication with the internal cavity of the tank;
- an open/close element co-operating with a valve seat defined by the valve body for controlling communication of the internal cavity of the valve with the aforesaid second opening for communication with the internal cavity of the tank; and
- elastic means set operatively between the open/close element and the valve body for maintaining said open/close element pressed against said valve seat so as to keep communication with the cavity of the tank closed until the pressure inside the tank exceeds a pre-set threshold value,
said safety valve being characterized in that said elastic means are arranged in series with an element made of fusible material, set between the open/close element and a surface of arrest of the valve body so that, when the temperature exceeds a pre-set threshold value, said fuse element melts and said elastic means is unloaded, leaving the open/close element free to open.

Thanks to the characteristics referred to above, the safety valve according to the invention incorporates both the function of overpressure valve and the function of fusible valve, which opens to discharge the tank to the external atmosphere when a pre-set maximum temperature is exceeded.

The above result is obtained without any increase in cost and with a decidedly reduced encumbrance as compared to a solution that envisages providing in parallel an overpressure valve and a fusible valve.

According to a further preferred characteristic of the invention, the safety valve is provided with sensor means for detecting a displacement of the aforesaid open/close element from its closing position, which enables a signal indicating intervention of the safety valve to be issued to warn the driver of the motor vehicle.

Of course, a further subject of the invention is a pressurized gas tank, particularly a tank for methane or LPG for motor vehicles, provided with a safety valve of the type described above.

Further characteristics and advantages of the invention will emerge from the ensuing description, with reference to the annexed drawing, which is provided purely by way of non-limiting example and which illustrates, in cross-sectional view and at an enlarged scale, a safety valve according to the invention.

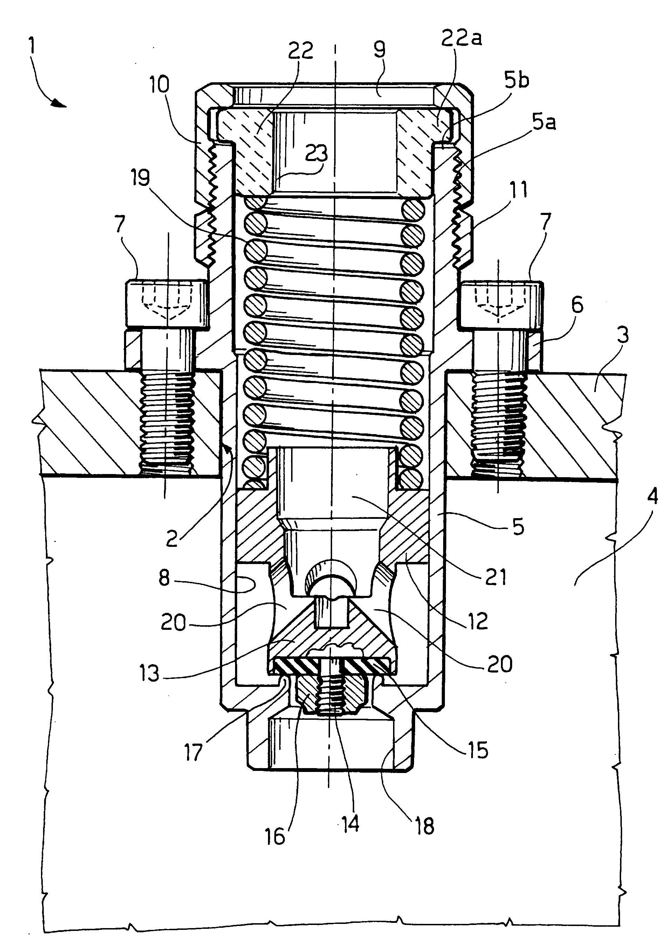

In the drawing, the reference number 1 indicates, as a whole, a safety valve that is mounted in a hole 2 of a wall 3 of a pressurized gas tank, which has a cavity 4 filled with gas. As already referred to above, the invention is of general application but in any case a particular subject of the invention is its application to a tank for containing methane or LPG for motor vehicles. The valve 1 comprises a valve body 5, which is provided with a flange 6, fixed by means of screws 7, to the wall 3 of the tank. The body 5 has a cylindrical conformation and is inserted in the hole 2 of the wall 3. Defined inside the cylindrical body 5 of the valve 1 is a cylindrical cavity 8, which communicates, at one top end (as viewed in the figure), with the external atmosphere via the central opening 9 of a cap 10 screwed directly on a threaded top end portion 5a of the body 5, with the aid of a locknut 11.

Slidably mounted inside the cylindrical cavity 8 is a piston 12 carrying, at the bottom, a central protuberance 13. The front face of the protuberance 13 carries a central pin 14 and an annular seat for a disk made of elastomeric material 15, which operates as an open/close element. The disk 15 is withheld in its seat above the protuberance 13 by a nut 16 screwed on the central pin 14, which is threaded. The open/close element 15 co-operates with a valve seat 17, which is defined by a projecting circumferential edge made at the restricted top end of an opening 18 for communication of the internal cavity 8 of the valve with the internal cavity 4 of the tank. Said communication is controlled by the open/close element 15.

A helical spring 19 is set coaxially inside the cylindrical cavity 8 of the valve and is operatively set between the piston 12 and the cap 10 of the valve in a loaded condition. In said condition, the spring 19 tends to maintain the open/close element 15 pressed against the valve seat 17 in order to interrupt communication between the internal cavity 8 of the valve and the internal cavity 4 of the tank. If the pressure inside the tank exceeds a pre-set threshold value, sufficient for overcoming the load of the spring 19, the open/close element 15 rises, coming out of the valve seat 17, so that there is created a communication between the internal cavity 4 of the tank and the internal cavity 8 of the valve. In said condition, the gas in overpressure contained in the tank can then come out, passing through the opening 18, the cavity 8, the passages 20, 21 made in the body of the protuberance 13 and of the piston 12, and finally through the central opening 9 of the cap 10.

It should be noted that, in the valve according to the invention, the spring 19 is arranged in series with a bushing 22, made of a material that is designed to melt beyond a threshold temperature. Various materials suitable for said purpose are known; for example, a bismuth-based eutectic alloy can be used.

In the particular embodiment illustrated herein, the bushing 22 has an enlarged head 22a, which bears upon the end wall of the cap 10. In the assembled condition of the valve, with the cap 10 completely screwed on the threaded portion 5a of the valve body 5, the head 22a of the fuse element 22 does not bear upon the annular end surface 5b of the valve body 5.

Thanks to the arrangement described above, the safety valve according to the invention is able to operate both as overpressure valve and as safety valve designed to discharge the tank to the external atmosphere in the event of a pre-set maximum temperature being exceeded. In the case of overpressure, the pressure inside the tank is able to overcome the load of the helical spring 19 and raises, as already described, the open/close element 15, enabling discharge of the gas into the external atmosphere through the opening 18, the cavity 8, the passages 20, 21, the central opening 9 of the cap 10, as well as of course the central opening 23 of the fusible bushing 22.

In the case, instead, where a pre-set maximum temperature is exceeded, the fuse element 22 melts, so that the spring 19 ceases to have any point of contrast. Consequently, the spring 19 is unloaded extremely fast, leaving the open/close element 15 free to rise in order to enable discharge of the tank to the external atmosphere.

According to a further preferred characteristic, the valve can be provided with a sensor of any type, designed to detect a recession of the open/close element 15 from its closing position. Said sensor can, for example, consist of a microswitch operatively associated to the open/close element. Said element is not illustrated herein in so far as it can be made in any known way, as will be readily understandable for a person skilled in the sector. The provision of a sensor for opening the open/close element 5 enables a signal to be issued promptly for the driver of the motor vehicle indicating that the safety valve has gone into action.

Of course, without prejudice to the principle of the invention, the details of construction and the embodiments may vary widely with respect to what is described and illustrated herein purely by way of example, without thereby departing from the scope of the present invention.

## Claims

1. A safety valve for pressurized tanks, comprising:
- a valve body (5) defining an internal cavity (8) with a first opening (9) for discharge to the external atmosphere, and a second opening (18) for communication with the internal cavity (4) of the tank;
- an open/close element (15) co-operating with a valve seat (17), defined by the valve body (5), for controlling communication of the internal cavity (8) of the valve with the second opening (18) for communication with the internal cavity (4) of the tank; and
- elastic means (19), operatively set between the open/close element (15) and the valve body (5), for maintaining said open/close element (15) pressed against said valve seat (17) so as to keep communication with the cavity of the tank closed until the pressure inside the latter exceeds a pre-set threshold value,
said safety valve being **characterized in that** said elastic means (19) are arranged operatively in series with an element made of fusible material (22), set between the open/close element (15) and a contrast wall of the valve body (5), so that, at a temperature higher than a pre-set threshold value, said fuse element (22) melts, causing discharge of said elastic means (19), which consequently leaves the open/close element (15) free to open.

2. The valve according to Claim 1, **characterized in that** said valve body (5) defines a cylindrical internal cavity (8), within which is slidably mounted a piston (12) bearing said open/close element (15), and **in that** said elastic means consist of a helical spring (19) set between said piston (12) and a bushing (22), which constitutes said fuse element, said bushing (22) resting against a contrast wall of the valve body (5) on its side opposite to the one facing the helical spring (19).

3. The valve according to Claim 2, **characterized in that** said arrest wall is defined by a closing cap (10) screwed on one end of said valve body (5).

4. The valve according to Claim 2, **characterized in that** said piston (12) carries a central protuberance (13), which bears on its front face a seat for a disk made of elastomeric material constituting said open/close element (15).

5. The valve according to Claim 4, **characterized in that** said valve seat is defined by a projecting circumferential edge (17) of a restricted end portion of said second opening (18) of the valve body (5), which is defined by an axial hole made at one end of a cylindrical body defining said valve body (5).

6. The valve according to Claim 5, **characterized in that** said piston (12) and said central protuberance (13) are provided with internal passages (20, 21) for setting the two parts of the cylindrical cavity (8) of the valve separated by said piston (12) in communication with one another.

7. The valve according to Claim 1, **characterized in that** associated to said open/close element (15) are sensor means for detecting the displacement of said open/close element (15) from its closing position.

8. A gas tank for motor vehicles, **characterized in that in that** it is provided with a safety valve according to any one of the preceding claims.
